**Europäisches Patentamt**

**European Patent Office**

**Office européen des brevets**

(19)

(11) Veröffentlichungsnummer : **0 379 032 B1**

(12)

# EUROPÄISCHE PATENTSCHRIFT

(45) Veröffentlichungstag der Patentschrift :
**16.09.92 Patentblatt 92/38**

(51) Int. Cl.⁵ : **B01J 35/04, F01N 3/24**

(21) Anmeldenummer : **90100339.2**

(22) Anmeldetag : **09.01.90**

---

(54) **Abgasfilter.**

---

(30) Priorität : **20.01.89 DE 3901609**

(43) Veröffentlichungstag der Anmeldung :
**25.07.90 Patentblatt 90/30**

(45) Bekanntmachung des Hinweises auf die
Patenterteilung :
**16.09.92 Patentblatt 92/38**

(84) Benannte Vertragsstaaten :
**AT BE DE DK ES FR IT NL SE**

(56) Entgegenhaltungen :
**DE-A- 2 459 362**
**DE-A- 2 501 241**
**DE-A- 2 936 927**
**FR-A- 2 246 517**

(73) Patentinhaber : **Schwäbische Hüttenwerke**
**Gesellschaft mit beschränkter Haftung**
**Wilhelmstrasse 67 Postfach 3280**
**W-7080 Aalen-Wasseralfingen (DE)**

(72) Erfinder : **Härle, Hans H., Dipl.-Ing.**
**Röttingerstrasse 38**
**W-7085 Bopfingen (DE)**

(74) Vertreter : **Lorenz, Werner, Dipl.-Ing.**
**Fasanenstrasse 7**
**W-7920 Heidenheim (DE)**

---

**Beschreibung**

Die Erfindung betrifft einen Abgasfilter zur Beseitigung von schädlichen Bestandteilen aus Abgasen, insbesondere aus den Abgasen von Verbrennungsmotoren, der eine Vielzahl von Strömungskanäle oder Strömungskammern und gasdurchlässige Wände aufweist.

Insbesondere zur Beseitung von Schadstoffen aus Verbrennungsmotoren werden zunehmend Abgasfilter eingesetzt. Bekannt sind Rußfilter aus keramischem Werkstoff für Dieselmotore, wobei die heißen Motorabgase in Einlaufkanäle des Filterkörpers einströmen. Anschließend durchdringen sie die porösen, die Kanäle umgebenden Filterwände und werden dann über Auslaßkanäle wieder gereinigt abgeleitet. Aufgrund der hohen Temperatur wird der Ruß, d.h. Kohlenstoff, in den Filterwänden in Gas und Asche umgewandelt, welcher dann zusammen mit dem Abgas aus dem Auspuff ausgeblasen wird.

Nachteilig bei einem derartigen Filter ist jedoch, daß durch die Porengrößenverteilung und die runde Porenform die Rußabscheidung bestimmt, aber auch begrenzt wird. Ein weiterer Nachteil keramischer Filterkörper besteht darin, daß sie gegen rasche Temperaturänderungen, örtliche Überhitzungen und gegen Stöße und Schläge empfindlich sind.

Bekannt sind auch bereits Abgaskatalysatoren, die durch katalytische Wirkung weitere schädliche Bestandteile, wie z.B. Kohlenmonoxyd, Kohlenwasserstoffe und Stickoxyde, aus dem Abgas entfernen. Hierfür werden z.B. Filter mit Beschichtungen aus Platin, Rhodium, Vanadium oder anderen katalytisch wirkenden Werkstoffen verwendet. Derartige Filter sind jedoch sehr teuer, zumeist ebenfalls sehr empfindlich und darüber hinaus in ihrer Wirkung beschränkt.

Aus der DE-A-2 459 362 ist ein katalysator bekannt zur Umwandlung bzw. chemischen Änderung von schädlichen Bestandteilen. Der katalysator besitzt einen Körper, der durchlässige Gaskanäle aufweist und der spiralförmig gewickelt ist.

In einer älteren Anmeldung wurde bereits vorgeschlagen, einen Filterkörper aus hochtemperaturbeständigem formgepreßtem Sintermaterial herzustellen. Ein derartiger Filterkörper ist relativ unempfindlich gegen Temperaturschocks und Schläge oder Stöße. Von Vorteil ist weiterhin, daß er eine relativ hohe Wärmeleitfähigkeit bei gleichzeitig hoher innerer Oberfläche besitzt, wodurch seine Wirkungsweise erhöht wird, insbesondere bei einem Einsatz als Rußfilter in Dieselmotoren die Vergasung der Rußteile wegen der besseren Verteilung auf den Einzelfasern begünstigt wird. Die hohe Oberfläche des Filters läßt darüber hinaus zusätzlich die katalytische Wirkung voll zur Geltung kommen.

Der vorliegenden Erfindung liegt die Aufgabe zugrunde, einen Abgasfilter der eingangs erwähnten Art zu schaffen, der bei hoher Wirksamkeit und geringem Platzbedarf sich sehr einfach herstellen läßt.

Erfindungsgemäß wird diese Aufgabe dadurch gelöst, daß ein Band aus formgepreßtem und mit Abstandshaltern versehenem Sintermaterial aus grobkörnigem Pulver oder Metallspänen, Metalldrahtstücken oder einem Geflecht aus dünnen Metalldrähten in mehreren Windungen spiralförmig gewickelt ist, wobei durch die Abstandshalter zur Bildung von Strömungskanälen zwischen den einzelnen Wicklungen Abstände eingehalten sind, wobei das Band und ggf. weitere Teile des Filters zu einer Einheit gesintert ist, wobei die Wicklungen jeweils abwechselnd auf der Einlaufseite und der Auslaufseite stirnseitig geschlossen sind und wobei die Spiralwicklung des Bandes durch mehrere sich in vertikaler Richtung wenigstens annähernd über die gesamte Länge des Abgasfilters erstreckende Trennähte in einzelne Abschnitte unterteilt ist, welche den Zwischenraum zwischen zwei benachbart zueinander liegenden Wicklungen ausfüllen.

Bei der erfindungsgemäßen Lösung wurde von der Erkenntnis ausgegangen, daß sich Sintermaterial in nahezu beliebigen Formen herstellen und sintern läßt. Verwendet man nun ein formgepreßtes Band, das entsprechend mit den Abstandshaltern versehen ist und wickelt es in der erfindungsgemäßen Form auf, so läßt sich damit auf einfache Weise ein wirksamer Abgasfilter herstellen. Insbesondere erreicht man auf diese Weise auf einem begrenzten Raum eine Vielzahl von Strömungskanäle und Filterwände. Durch die Abstandshalter in den Wänden werden dabei auf einfache Weise die einzelnen Wicklungen auf Abstand gehalten und ergeben damit die erforderlichen Strömungskanäle. Durch die Trennähte wird eine definierte Bildung von Strömungskanäle erreicht, was insbesondere bei Verwendung des Abgasfilters als katalysator von Bedeutung ist. Durch die stirnseitigen Abschlüsse werden streng voneinander getrennte Einlaß- und Auslaßkanäle geschaffen, die jeweils durch eine Zwischenwand zwischen benachbart zueinander liegenden Wicklungen voneinander getrennt sind. Zur Abgasreinigung sind deshalb die Abgase gezwungen, durch die Wände zwischen den einzelnen Wicklungen durchzuströmen.

Von Vorteil ist es, wenn das Band auf einen kern gewickelt ist. Der kern kann zum einen einen definierten Anfang bilden und zum andern dient er zur Erhöhung der Stabilität.

In einfacher Weise kann dabei der kern ein geschlitztes Rohr aufweisen, dessen eine Schlitzkante auf einer radialen Ebene liegt, die größer ist als die der anderen Schlitzkante, wobei an die Schlitzkante mit dem größeren Abstand vom Zentrum das innere Ende des Bandes befestigt ist.

2

Ein derartiges Rohr, das auf einfache Weise z.B. aus einem Stahlrohr entsprechender Hitzebeständigkeit hergestellt sein kann und lediglich mit einem Schlitz versehen werden muß, kann als Tragrohr für das Wickelgebilde dienen.

Wenn die Trennähte nach jeder Wicklung des Bandes angeordnet sind, wird die Spiralwicklung in eine Vielzahl von einzelnen und voneiander getrennten Strömungskanäle aufgeteilt.

Die Abstandshalter in dem Band können auf beliebige Weise gebildet werden. Eine einfache Maßnahme besteht darin, daß sie durch in das Band eingeformte und sich wenigstens annähernd über die gesamte Bandhöhe bzw. Abgasfilterlänge erstreckende Sicken, Rippen oder Stege gebildet sind. Diese Sicken, Rippen oder Stege sorgen auf einfache Weise für den erforderlichen Abstand zwischen den einzelnen Wicklungen.

Eine andere Ausgestaltung kann darin bestehen, daß die Abstandshalter durch ein Gewebe gebildet sind, das eine Vielzahl von horizontal und vertikal miteinander verwobenen Drähte aufweisen.

Durch das Gewebe, wozu im allgemeinen ein hitzbeständiges Stahlgewebe verwendet werden wird, wird eine hohe Stabilität für das Band erreicht, wobei gleichzeitig in den Kammern für eine große Verwirbelung der Abgase gesorgt wird. Neben einer in Längsrichtung des Abgasfilters verlaufenden Hauptströmung sind nämlich dabei auch Querströmungen möglich. Auf diese Weise wird eine bessere Thermik und eine noch bessere Wärmeverteilung erreicht. Das mit dem Band zu einer Einheit versinterte Gewebe ergibt für das Abgasfilter eine bessere Abstützung und höhere Stabilität gegen Schwingungen.

Bei Verwendung eines Tragrohres als kern erreicht man auf einfache Weise eine Umgehung des Abgasfilters, z.B. in Notfällen. Hierzu ist es lediglich erforderlich, daß das Tragrohr wenigstens auf einer der beiden Stirnseiten durcheinen Deckel geschlossen ist, wobei in den Deckel ein Notdurchlaßventil angeordnet ist.

Im allgemeinen wird das Tragrohr auf einer oder beiden Stirnseiten geschlossen sein, damit die gesamten Abgase durch die Strömungskanäle strömen. Bringt man jedoch das erfindungsgemäße Notdurchlaßventil an, so kann das Innere des Tragrohres zur Ableitung der Abgase verwendet werden.

Nachfolgend sind anhand der Zeichnungen Ausführungsbeispiele der Erfindung, aus denen weitere erfindungsgemäße Vorteile hervorgehen, prinzipmäßig beschrieben.

Es zeigt:

Fig. 1: eine Draufsicht auf den erfindungsgemäßen Abgasfilter

Fig. 2: eine Ausschnittvergrößerung eines Teiles der Wicklungen mit Sicken als Abstandshalter (von der oberen Stirnseite aus gesehen).

Fig. 3: einen Schnitt nach der Linie III - III der Fig. 1 in vergrößerter Darstellung mit einem Gewebe als Abstandshalter.

Ausgangspunkt bei der Herstellung des erfindungsgemäßen Abgasfilters ist ein Rohr 1 aus hitzbeständigem Stahl. Das Rohr 1 wird mit einem Längsschlitz versehen, und ein Ende 2 wird aus der Kreisform nach außen gebogen.

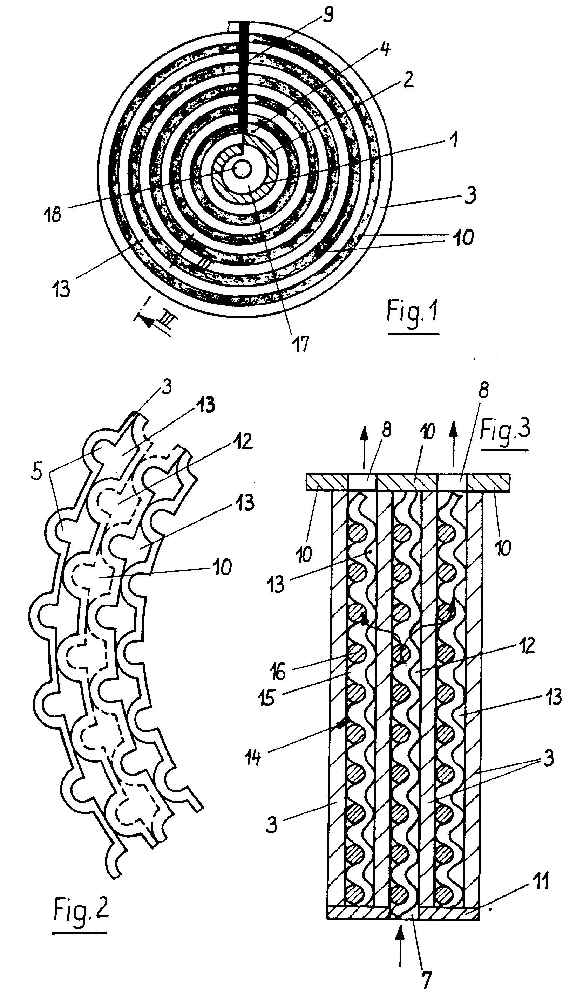

Den Kern des Abgasfilters bildet eine Platte bzw. ein Band 3 mit einer Wandstärke von ca. 0,5 bis 5 mm. Das Band 3 wird mit der Anfangsstirnseite 4 stumpf an die aus der Kreisebene herausgebogene Schlitzkante des Rohres 1 angeschweißt oder angelötet. Anschließend wird das Band in einer Vielzahl von Lagen um das Band gewickelt, womit eine spiralförmige Form entsteht. In der Fig. 1 ist dies prinzipmäßig dargestellt. Aus der Ausschnittvergrößerung der Fig. 2 ist ersichtlich, daß das Band 3 mit einer Vielzahl von nebeneinander und auf Abstand voneinander angeordneten sich über die gesamte Höhe bzw. Länge des Abgasfilters erstreckende Sicken 5 versehen ist. Die Sicken 5 werden in einfacher Weise bei der Formpressung des Bandes aus Sintermaterial entsprechend in ihrer Form und Lage berücksichtigt. Beim Aufwickeln des formgepreßten Bandes 3 werden auf diese Weise durch die Sicken 5 der jeweils einen Wicklung des Bandes die benachbart dazu liegende andere Wicklung auf Abstand gehalten. Auf diese Weise ergeben sich eine Vielzahl von Strömungskanäle 4, nämlich Einströmkanäle 12 und Ausströmkanäle 13.

Um definierte Einströmöffnungen 7 und Ausströmöffnungen 8 zu schaffen (siehe Fig. 3) wird nach jeder Wicklung des Bandes 3 um das Rohr 1, d.h. jeweils nach ca. 360 Grad, durch eine sich über die gesamte Höhe bzw. Länge des Abgasfilters erstreckende Trennaht 9, z.B. durch eine Schweißnaht, eine entsprechende Trennung in einzelne Ringkammern vorgenommen, d.h. in einer Anzahl von Ringkammern, die der Anzahl von Wicklungen entspricht. Gleichzeitig werden abwechseld jeweils auf der Unter- und Oberseite des Abgasfilters durch Abdeckungen 10 und 11 die Zwischenräume zwischen zwei benachbart zueinander liegenden Wicklungen freigelassen, wodurch Einström- und Ausströmöffnungen 7 und 8 definiert werden. Auf diese Weise werden exakt von einander getrennte Strömungsknäle gebildet.

Die Fig. 1 zeigt die Draufsicht auf den Abgasfilter von der Ausströmseite 8 aus. Aus Gründen der besseren Darstellung ist dabei jedoch das Rohr 1 mit einer Schraffur versehen, die Abdeckungen 10 auf der Ausströmseite 8 sind geschwärzt und die Abdeckungen 11 auf der Einlaufseite 7 sind offengelassen. Auf diese Weise werden jeweils nahezu ringförmig abwechselnd Einlaß- und Auslaßkanäle gebildet, die in den Fig. 2 und 3 näher dargestellt sind. Die Fig. 2 stellt dabei eine Teilansicht der oberen Stirnseite dar bzw. eine Ansicht von der Ausströmseite her gesehen, während Fig. 3 ein Schnitt nach der Linie III - III in anderer Ausgestaltung ist.

Nach Beendigung des Wicklungsvorgangens, Aufbringen der Trennähte 9 während des Wickelvorganges und das abschließende Abdecken der Kanäle durch die Abdeckungen 10 und 11 wird der Abgasfilter in üblicher Weise gesintert. Dabei verbinden sich alle Teile zu einer Einheit.

Aufgrund der Gasdurchlässigkeit des gesinterten Bandes 3 durchdringen die auf der Einlaufseite 7 in die Einströmkanäle 12 eintretenden Abgase die benachbarten Wicklungswände (siehe Pfeile in der Fig. 3) und können anschließend über Ausströmkanäle 13 zur Auslaufseite 8 strömen. In üblicher Weise erfolgt dabei die Reinigung der Abgase. Rußbestandteile bei einem Einsatz in einem Dieselfahrzeug werden dabei in Gas und Asche umgewandelt.

Ist das Band 3 mit katalytisch wirkenden Werkstoffen versehen, werden weitere schädliche Bestandteile, wie z.B. Kohlenmonoxyd, Kohlenwasserstoffe und Stickoxyde, aus dem Abgas entfernt.

Da die Festigkeit bzw. Porosität eines Sintermateriales in einem weiten Bereich festlegbar ist, kann der Abgasfilter auf einfache Weise den jeweiligen Anforderungen angepaßt werden.

Statt Verwendung von normalem Sinterpulver als Ausgangsmaterial kann z.B. grobkörniges Pulver oder Metallspäne, Metalldrahtstücke in einigen Millimeter Länge oder ein Geflecht aus dünnen Metalldrähten, verwendet werden, welches formgepreßt und anschließend in üblicher Weise gesintert wird. Auf diese Weise ergibt sich eine hohe Porosität und damit entsprechend gute Gasdurchlässigkeit mit großen Oberflächen.

Wie aus der Ausgestaltung nach der Fig. 3 weiter ersichtlich ist, kann das Band 3 statt mit in dieses eingeformte Sicken 5 auch mit einem Gewebe 14, z.B. aus hitzebeständigem Stahl, versehen werden. Das Gewebe weist in üblicher Weise eine Vielzahl von miteinander verwobenen vertikale und horizontale Drähte 15,16 auf. Das Gewebe wird ebenso wie die Abdeckungen 10 und 11 mit dem Band 3 zu einer Einheit gesintert.

Wenigstens eine der beiden Stirnseiten des Rohres 1 ist durch einen Deckel 17 verschlossen, wobei der Deckel 17 jedoch für eine Umgehung des Abgasfilters mit einem Notdurchlaßventil 18 versehen ist.

## Patentansprüche

1. Abgasfilter zur Beseitigung von schädlichen Bestandteilen aus Abgasen, insbesondere aus Abgasen von Verbrennungsmotoren, der eine Vielzahl von Strömungskanäle oder Strömungskammern und gasdurchlässige Wände aufweist,
dadurch gekennzeichnet, daß ein Band (3) aus formgepreßtem und mit Abstandshaltern (5,14) versehenem Sintermaterial aus grobkörnigem Pulver oder Metallspänen, Metalldrahtstücken oder einem Geflecht aus dünnen Metalldrähten in mehreren Windungen spiralförmig gewickelt ist, wobei durch die Abstandshalter (5,14) zur Bildung von Strömungskanälen (12,13) zwischen den einzelnen Wicklungen Abstände eingehalten sind, wobei das Band (3) und ggf. weitere Teile (10,11, 4) des Filters zu einer Einheit gesintert ist, wobei die Wicklungen jeweils abwechselnd auf der Einlaufseite (7) und der Auslaufseite (8) stirnseitig geschlossen sind und wobei die Spiralwicklung des Bandes (3) durch mehrere sich in vertikaler Richtung wenigstens annähernd über die gesamte Länge des Abgasfilters erstreckende Trennähte (9) in einzelne Abschnitte unterteilt ist, welche den Zwischenraum zwischen zwei benachbart zueinander liegenden Wicklungen ausfüllen.

2. Abgasfilter nach Anspruch 1,
dadurch gekennzeichnet, daß das Band (3) auf einen Kern (1) gewickelt ist.

3. Abgasfilter nach Anspruch 2,
dadurch gekennzeichnet, daß der Kern ein geschlitztes Tragrohr (1) aufweist, dessen eine Schlitzkante (4) auf einer radialen Ebene liegt, die größer ist als die der anderen Schlitzkante, und daß an die Schlitzkante (4) mit dem größeren Abstand vom Zentrum das innere Ende des Bandes (3) befestigt ist.

4. Abgasfilter nach Anspruch 1,
dadurch gekennzeichnet, daß wenigstens annähernd nach jeder Wicklung des Bandes (3) eine Trennaht (9) angeordnet ist.

5. Abgasfilter nach einem der Ansprüche 1 bis 4,
dadurch gekennzeichnet, daß die Abstandshalter durch in das Band eingeformte und sich wenigstens annähernd über die gesamte Bandhöhe bzw. Abgasfilterlänge erstreckende Sikken, Rippen und Stege (5) gebildet sind.

**6.** Abgasfilter nach einem der Ansprüche 1 bis 4,
**dadurch gekennzeichnet**, daß die Abstandshalter durch ein Gewebe (14) gebildet sind, die eine Vielzahl von horizontalen und vertikalen miteinander verwobenen Drähten (15,16) aufweisen.

**7.** Abgasfilter nach Anspruch 6,
**dadurch gekennzeichnet**, daß das Gewebe (14) mit dem Band (3) aus Sintermaterial zu einer Einheit gesintert ist.

**8.** Abgasfilter nach Anspruch 3,
**dadurch gekennzeichnet**, daß das Tragrohr (1) wenigstens auf einer der beiden Stirnseiten durch einen Deckel (6) geschlossen ist, wobei in dem Deckel (6) ein Notdurchlaßventil (18) angeordnet ist.

**9.** Verfahren zur Herstellung eines Abgasfilters nach einem der Ansprüche 1 bis 8,
**dadurch gekennzeichnet**, daß ein Band (3) aus formgepreßtem Sintermaterial aus grobkörnigem Pulver oder Metallspänen, Metalldrahtstücken oder einem Geflecht aus dünnen Metalldrähten spiralförmig gewickelt wird, wobei durch in das Sintermaterial eingeformte oder mit dem Sintermaterial verbundene Abstandshalter (5) definierte Abstände zu benachbart zueinander liegende Wicklungen eingehalten werden, und daß nach jeder Wicklung eine sich wenigstens annähernd über die ganze Länge des Abgasfilters erstreckende Trennnaht (9) eingefügt wird, die den Raum zwischen zwei benachbart zueinander liegenden Wicklungen abdeckt, wobei die einzelnen Wicklungen abwechselnd auf der Einlaufseite (7) und der Auslaufseite (8) geschlossen werden.

**10.** Verfahren nach Anspruch 9,
**dadurch gekennzeichnet**, daß das Band (3) auf einen Kern (1) gewickelt wird, wobei das innere Ende des Bandes mit dem Kern verbunden wird.

**11.** Verfahren nach Anspruch 10,
**dadurch gekennzeichnet**, daß als Kern ein geschlitztes Rohr (1) verwendet wird, wobei dessen eine Schlitzkante (4) nach außen aus der vorher gemeinsamen Ebene mit der anderen Schlitzkante herausgebogen wird und wobei das innere Ende des Bandes (3) an die äußere Schlitzkante (4) angeschweißt oder angelötet wird.

**Claims**

**1.** Waste gas filter for removing harmful constituents from waste gases, especially from the waste gases of internal combustion engines, having a plurality of flow channels or flow chambers and gas-permeable walls, characterised in that a strip (3) of compression moulded sintered material consisting of coarse-grained powder or metal chips, metal wire pieces or a mesh of thin metal wires and provided with spacers (5, 14) is wound spirally in a plurality of turns, spaces being maintained between the individual windings by the spacers (5, 14) in order to form flow channels (12, 13), the strip (3) and possibly other parts (10,11,4)of the filter being sintered together to form one unit, the windings being closed at the end face alternately on the inlet side (7) and on the outlet side (8) and the spiral winding of the strip (3) being divided into individual sections by means of a plurality of parting lines (9) extending in the vertical direction at least approximately over the entire length of the waste gas filter, said parting lines filling the intermediate space between two adjacent windings.

**2.** Waste gas filter according to claim 1, characterised in that the strip (3) is wound on to a core (1).

**3.** Waste gas filter according to claim 2, characterised in that the core has a slotted supporting tube (1), one of the slot edges (4) of which is situated in a radial plane which is larger than that of the other slot edge, and that the inner end of the strip (3) is fixed to the slot edge (4) at the greater distance from the centre.

**4.** Waste gas filter according to claim 1, characterised in that a parting line (9) is arranged at least approximately after each winding of the strip (3).

**5.** Waste gas filter according to one of claims 1 to 4, characterised in that the spacers are formed by corrugations, ribs and webs (5) moulded into the strip and extending at least approximately over the entire height of the strip or the entire length of the waste gas filter.

6. Waste gas filter according to one of claims 1 to 4, characterised in that the spacers are formed by a woven fabric (14) having a plurality of interwoven horizontal and vertical wires (15, 16).

7. Waste gas filter according to claim 6, characterised in that the woven fabric (14) is sintered together with the strip (3) of sintered material to form one unit.

8. Waste gas filter according to claim 3, characterised in that the supporting tube (1) is closed by a cover (6) on at least one of the two end faces, an emergency through-way valve (18) being arranged in the cover (6).

9. Process for the production of a waste gas filter according to one of claims 1 to 8, characterised in that a strip (3) of compression moulded sintered material consisting of coarse-grained powder or metal chips, metal wire pieces or a mesh of thin metal wires is wound spirally, defined spaces being maintained between adjacent windings by means of spacers (5) moulded into or connected to the sintered material, and that a parting line (9) extending at least approximately over the entire length of the waste gas filter is inserted after each winding and covers the space between two adjacent windings, the individual windings being closed alternately on the inlet side (7) and on the outlet side (8).

10. Process according to claim 9, characterised in that the strip (3) is wound on to a core (1), the inner end of the strip being connected to the core.

11. Process according to claim 10, characterised in that a slotted tube (1) is used as the core, one slot edge (4) of which is bent towards the exterior out of the plane previously in common with the other slot edge, and the inner end of the strip (3) being welded or soldered on to the outer slot edge (4).

**Revendications**

1. Filtre pour éliminer des composants nocifs de gaz d'échappement, notamment des gaz d'échappement de moteurs à combustion. comportant un grand nombre de canaux ou chambres d'écoulement et des parois perméables aux gaz, **caractérisé** en ce qu'une bande (3) d'un matériau fritté à partir d'une poudre à grains grossiers ou de copeaux métalliques, de morceaux de fils métalliques ou d'un treillis de minces fils métalliques, ce matériau étant moulé sous pression et pourvu d'éléments distanceurs (5, 14), est enroulée en spirale sur plusieurs tours, et dans lequel les éléments distanceurs (5, 14) maintiennent des écarts entre les divers enroulements pour former des canaux d'écoulement (12, 13), la bande (3) et, le cas échéant, d'autres éléments (10, 11, 4) du filtre sont frittés en une unité, les enroulements sont fermés sur des faces frontales. alternativement du côté de l'entrée (7) et du côté de la sortie (8), et l'enroulement en spirale de la bande (3) est subdivisé en secteurs par plusieurs cordons de séparation (9) s'étendant en direction verticale au moins approximativement sur toute la longueur du filtre et remplissant l'intervalle entre deux enroulements adjacents.

2. Filtre selon la revendication 1, **caractérisé** en ce que la bande (3) est enroulée sur un noyau (1).

3. Filtre selon la revendication 2, **caractérisé** en ce que le noyau comporte un tube porteur fendu (1) dans lequel un bord (4) de la fente se trouve à un rayon supérieur à celui de l'autre bord de la fente, et en ce que ledit bord (4) le plus éloigné du centre est fixé à l'extrémité interne de la bande (3).

4. Filtre selon la revendication 1, **caractérisé** en ce qu'un cordon de séparation (9) est disposé au moins approximativement après chaque enroulement de la bande (3).

5. Filtre selon l'une des revendications 1 à 4, **caractérisé** en ce que les éléments distanceurs sont constitués par des moulures, des nervures ou des crêtes (5) formées dans la bande et s'étendant au moins-approximativement sur la totalité de la hauteur de la bande ou de la longueur du filtre.

6. Filtre selon l'une des revendications 1 à 4, **caractérisé** en ce que les éléments distanceurs sont formés par un tissu (14) comportant un grand nombre de fils horizontaux et verticaux (15, 16) tissés ensemble.

7. Filtre selon la revendication 6, **caractérisé** en ce que le tissu (14) est fritté en une unité avec la bande (3) en matériau fritté.

8. Filtre selon la revendication 3, **caractérisé** en ce que le tube porteur (1) est fermé par un couvercle (6) sur au moins une des deux faces frontales. une soupape de sécurité (18) étant disposée dans le couvercle (6).

9. Procédé pour fabriquer un filtre à gaz d'échappement selon l'une des revendications 1 à 8, **caractérisé** en ce qu'une bande (3) d'un matériau fritté à partir d'une poudre à grains grossiers ou de copeaux métalliques, de morceaux de fils métalliques ou d'un treillis de minces fils métalliques est enroulée en spirale, des écarts définis étant maintenus entre des enroulements adjacents au moyen d'éléments distanceurs (5) formés dans le matériau fritté ou liés au matériau fritté, et en ce qu'après chaque enroulement, un cordon de séparation (9) s'étendant au moins approximativement sur toute la longueur du filtre est mis en place pour obturer l'intervalle entre deux enroulements adjacents, les enroulements étant Permés alternativement du côté de l'entrée (7) et du côté de la sortie (8).

10. Procédé selon la revendication 9, **caractérisé** en ce que la bande (3) est enroulée sur un noyau (1), l'extrémité interne de la bande étant fixée au noyau.

11. Procédé selon la revendication 10, **caractérisé** en ce qu'un tube fendu (1) est utilisé comme noyau. en ce qu'un bord (4) de la fente est décalé vers l'extérieur par flexion à partir du plan initialement commun avec l'autre bord de la fente, et en ce que l'extrémité interne de la bande (3) est soudée ou brasée au bord extérieur (4) de la fente.

Fig. 1

Fig. 2

Fig. 3